# EUROPÄISCHE PATENTSCHRIFT

(11) **EP 2 868 461 B1**
(45) Veröffentlichungstag und Bekanntmachung des Hinweises auf die Patenterteilung: **18.12.2019**
(21) Anmeldenummer: 14190975.4
(22) Anmeldetag: 30.10.2014
(51) Int. Cl.: B29L 11/00, B29D 11/00

(54) **Herstellungsverfahren für ein Brillenglas**
Method for producing a spectacle lens
Procédé de fabrication d'un verre de lunette

(30) Priorität: 31.10.2013 DE 102013222232
(43) Veröffentlichungstag der Anmeldung: 06.05.2015
(73) Patentinhaber: Carl Zeiss Vision International GmbH, 73430 Aalen (DE)
(72) Erfinder: Meschenmoser, Ralf, 73457 Essingen (DE); Kurz, Norbert, 73430 Aalen (DE); Riedel, Malte, 73434 Aalen (DE); Düwel, Stephan, 73430 Aalen (DE)
(74) Vertreter: Glawe, Delfs, Moll

(56) Entgegenhaltungen:
- DE-A1-102010 044 893
- GB-A- 2 040 213
- US-A- 3 938 775
- US-A- 4 257 988
- US-A- 6 103 148
- US-A1- 2005 179 148
- US-A1- 2009 179 339

## Beschreibung

Die Erfindung betrifft ein Verfahren zur Herstellung von Brillengläsern.

Bei der Herstellung eines Brillenglases wird in der Regel zunächst aus einem geeigneten Kunststoff ein Rohling gegossen, der in einem zweiten Fertigungsschritt, der so genannten Rezeptglasfertigung, in die endgültige Form zur Erzielung der Rezeptwerte gebracht wird. Die Rezeptglasfertigung beinhaltet eine spanende Bearbeitung. Zur Minimierung der erforderlichen Lagerhaltung von Rohlingen werden in der Regel diese Rohlinge nur in groben Abstufungen hinsichtlich Durchmesser und Krümmung der Vorder- und Rückflächen zur Verfügung gestellt. Bei der Rezeptglasfertigung ist daher in der Regel ein erheblicher Materialabtrag erforderlich, es werden üblicherweise etwa 70 Gew.-% des Materials des Rohlings zerspant und verworfen. Ein Recycling dieses Materials ist nicht möglich.

Zur Bearbeitung des Rohlings in der Rezeptglasfertigung muss an diesem ein Blockstück angebracht werden, mittels dem der Rohling zur Bearbeitung in einer geeigneten Werkzeugmaschine gehaltert werden kann. Zum Anbringen des Rohlings an das Blockstück wird in der Regel eine niedrigschmelzende Metalllegierung verwendet. Es wird in der Regel nur ein kleiner Flächenanteil des Rohlings geblockt, da die verwendeten Schwermetalllegierungen sehr teuer sind und zudem eine sehr aufwändige Reinigung des Abwassers erforderlich ist, um dessen Kontaminierung mit Schwermetallen zu vermeiden. Die überstehenden Glasränder neigen bei der Bearbeitung zu unerwünschten Schwingungen oder zum Nachgeben und zum Bruch. Durch das Schwingen kann sich eine unerwünschte Struktur auf der Fläche ergeben, die nicht herauspoliert werden kann, da auch beim Polieren ein Schwingen und Nachgeben des Glasrandes erfolgt. Ferner wird der Außenbereich beim Bearbeiten nach unten gedrückt und schnappt nach der Belastung wieder zurück, dadurch kann sich auf der nicht bearbeiteten Rückfläche eine Art Wulst ergeben.

Es ist bereits vorgeschlagen worden (WO 2011/110300 A2), bei einer herkömmlichen Gießform eine Gießformschale mit einem integrierten Blockstück zu versehen. Nach dem Gießen verbleibt der Rohling mit einer Fläche (der Vorder- oder Rückfläche) anhaftend an dieser Gießformschale und kann mittels des integrierten Blockstücks in der Rezeptglasfertigung (auf der gegenüberliegenden Fläche) bearbeitet werden.

US 2011/0018150 A1 offenbart ein Verfahren zur Herstellung eines Brillenglases, bei dem das noch nicht polymerisierte Harz in eine Gießform gegeben wird, deren vordere und rückwärtige Stirnseiten flexibel und transparent sind. Die Schrift schlägt vor, das noch nicht ausgehärtete Harz vor dem Auge des zukünftigen Brillenträgers mittels der flexiblen Stirnseiten so zu formen, dass eine Linse mit den gewünschten Korrekturwerten entsteht. Es erscheint zweifelhaft, ob ein solches Verfahren praktikabel ist.

WO 2006/114789 A2 offenbart eine Gießform und einen Dichtring zur Herstellung eines Brillenglases.

Der Erfindung liegt die Aufgabe zu Grunde, eine Möglichkeit zur einfachen und kostengünstigen Herstellung von individuell an einen Brillenträger angepassten Brillengläsern zur Verfügung zu stellen.
1. Gemäß einem ersten Aspekt der Erfindung wird diese Aufgabe gelöst durch ein Verfahren zur Herstellung eines Brillenglases, mit den Schritten:
   a) Zusammenfügen
      i. einer Gießform (1) und einer durch Urformen hergestellten Gießformschale (11),
      ii. und eines Dichtrings, der eine Umfangsdichtung (21), an einer ersten Stirnseite eine Öffnung zur Aufnahme einer Gießform, und an der zweiten Stirnseite eine flexible Membran (22) aufweist,
      unter Bildung eines Gießhohlraums,
   b) Einfüllen eines polymerisierbaren Materials in den Gießhohlraum (3),
   c) Fixieren der flexiblen Membran (22) des Dichtrings (2) in der gewünschten Flächenform,
   d) Durchführen der Polymerisation,
   e) Entnahme der Gießform (1) mit dem angegossenen Brillenglasrohling aus dem Dichtring (2), dadurch gekennzeichnet dass, die Gießform (1) ein integriertes Blockstück (13) aufweist und das Einfüllen des polymerisierbaren Materials in den Gießhohlraum (3) unter Zuhilfenahme einer Pumpwirkung der flexiblen Membran (22) des Dichtrings (2) erfolgt.

Optional können zusätzlich ggf. erforderliche Nachbearbeitungsschritten, insbesondere Rezeptschleifen, zur Herstellung des fertigen Brillenglases, durchgeführt werden.

Geeignete Materialien für Dichtring und flexible Membran sind bspw. Kautschuke und Polymere.

Zunächst seien einige im Rahmen der Erfindung verwendete Begriffe erläutert.

Eine Gießform dient zum Abformen wenigstens einer Fläche (Vorder- oder Rückfläche) eines Brillenglases aus einem polymerisierbaren Material (Monomer). Sie weist eine Gießformschale (in der Regel entweder eine Vorder- oder Rückflächenformschale) auf, die eine so genannte optische Fläche aufweist. Die optische Fläche ist die Gegenfläche zu der Vorder- bzw. Rückfläche des in einer solchen Gießform gegossenen Rohlings.

Die Gießform weist ein integriertes Blockstück auf. Integriert bedeutet, dass es (vorzugsweise einstückig) mit der Gießform verbunden ist. Das Blockstück dient der temporären Verbindung der Gießform (mit daran anhaftenden Gießling (bzw. Rohling) mit einer Bearbeitungsmaschine.

Erfindungsgemäß ist die Gießformschale durch Urformen hergestellt. Dies bedeutet, dass wenigstens der die optische Fläche (Gegenfläche zu der abgegossenen Fläche) bildende Bereich der Gießform durch Materialaufbau mittels Urformen hergestellt ist.

Urformen bezeichnet gemäß DIN 8580 alle Fertigungsverfahren, bei denen aus einem formlosen Stoff ein fester Körper hergestellt wird. Es wird dabei die Form eines geometrisch bestimmten, festen Körpers hergestellt und der Stoffzusammenhalt geschaffen. Die verwendeten Ausgangsstoffe können flüssig, plastisch, körnig oder pulverförmig sein.

Eine im Rahmen der Erfindung bevorzugte Untergruppe des Urformens ist das Spritzgießen. Bei diesem Verfahren wird ein Kunststoff (in der Regel ein Granulat) plastifiziert und in ein Spritzgießwerkzeug eingespritzt. Dessen Hohlraum bestimmt die Form und die Oberflächenstruktur des fertigen Teils.

Ebenfalls durchführbar ist im Rahmen der Erfindung das 3D-Drucken als eine Variante des Urformens. Beim 3D-Drucken handelt es sich um ein additives Herstellungsverfahren, bei dem die gewünschte Form ausschließlich durch Materialauftrag hergestellt wird. Ein bevorzugtes 3D-Druckverfahren ist das Fused Deposition Modeling (FDM) bei dem vorzugsweise ein thermoplastisches Material aus einer Düse zur Bildung der gewünschten Struktur strangförmig aufgetragen wird. Geeignete thermoplastische Kunststoffe können beispielsweise ABS-, PC-, PLA-, HDPE- und PPSU-Kunststoffe sein. Da die Gießform bevorzugt als Einwegform zur Herstellung lediglich eines einzigen Brillenglases verwendet wird, können bevorzugt biologisch abbaubare Kunststoffe Verwendung finden. Ebenfalls einsetzbar im Rahmen der Erfindung ist das 3D-Drucken unter Verwendung fotopolymerisierbarer, insbesondere UV-härtbarer Kunststoffe.

Das Herstellen des Brillenglases erfolgt durch Gießen. Zur Bildung eines Gießhohlraums wirkt die Gießform mit einem Dichtring zusammenwirken.

Der Dichtring bildet zusammen mit der Gießform einen Gießhohlraum, in den polymerisierbares Material zur Herstellung eines Rohlings eingefüllt wird. Es kann sich dabei um ein bekanntes, zur Herstellung von Brillengläsern verwendetes polymerisierbares Material handeln, beispielhaft genannt seien CR-39® (Polyallyldiglycolcarbonat (PDAC)), CR-607® und Trivex® (stickstoffmodifiziertes Polyurethan) von PPG Industries sowie die MR-Serie (Thiourethanpolymere) von Mitsui Chemicals. Geeignete polymerisierbare Massen sind dem Fachmann geläufig.

Die flexible Membran des Dichtrings wird in der gewünschten Flächenform fixiert und die Polymerisation durchgeführt. Die Gießform mit dem angegossenen Rohling wird aus dem Dichtring entnommen. Anschließend wird eine gegebenenfalls erforderliche Nachbearbeitung durchgeführt, insbesondere eine Rezeptbearbeitung (Rezeptschleifen) zur Herstellung des fertigen Brillenglases.

Das Einfüllen des polymerisierbaren Materials in den Gießhohlraum erfolgt unter Zuhilfenahme der Pumpwirkung der flexiblen Membran des Dichtrings. Das Fixieren der flexiblen Membran des Dichtrings in der gewünschten Flächenform erfolgt bevorzugt durch ein formgebendes Element, weiter bevorzugt ein Federspannelement. Gegebenenfalls erforderliche Nachbearbeitungsschritte werden bevorzugt wenigstens zum Teil unter Verbleib des Brillenglasrohlings auf der Gießform und Verwendung des integrierten Blockstücks durchgeführt.

Bevorzugt wird der Rohling mit einem Flächenaufmaß von 10 mm oder weniger, weiter vorzugsweise 5 mm oder weniger, weiter vorzugsweise 0,2-5 mm hergestellt. Der Materialabtrag bei der Nachbearbeitung kann erfindungsgemäß gering ausfallen, er beträgt bevorzugt 20 Gew.-% oder weniger, weiter vorzugsweise 10 Gew.-% oder weniger.

Die Umfangsdichtung bildet die Randbereiche des Gießhohlraums, zum Gießen eines kreisförmigen Rohlings ist sie somit kreisförmig ausgebildet. Die Umfangsdichtung wirkt mit den Rändern der Gießform abdichtend zusammen, abdichtend bedeutet hier, dass die Dichtigkeit hinreichend ist, um ein Austreten von polymerisierbaren Material aus dem Gießhohlraum zu verhindern. Die Umfangsdichtung kann dergestalt flexibel ausgebildet sein, dass sie mit unterschiedlich geformten Gießformen zusammenwirken kann. Diese müssen nicht notwendigerweise kreisförmig sein, vielmehr kann ihr Rand von vornherein an die gewünschte endgültige Randform des Brillenglases angepasst sein.

Der Dichtring weist an einer Stirnseite eine Öffnung zur Aufnahme einer Gießform auf. In der Regel ist er an dieser Stirnseite vollständig offen, so dass die Umfangsdichtung den Rand einer eingesetzten Gießform dichtend umfasst. An der zweiten Stirnseite weist er eine flexible Membran auf. Diese flexible Membran bildet an dieser Stirnseite die Begrenzung des Gießhohlraums.

Die Gießform mit einer individuell durch 3D-Druck geformten Gießformschale erlaubt es, einen Brillenglasrohling mit von vornherein fertiger und individuell angepasster Vorder- oder Rückfläche zu gießen. Die weitere Bearbeitung des Rohlings, insbesondere das Rezeptschleifen auf der gegenüberliegenden Fläche, kann unter Verwendung der Gießform als Blockstück erfolgen. Über die gesamte Fertigung des Brillenglases bleibt somit die abgegossene fertige Fläche geschützt, ein nachträgliches Aufblocken von einem Blockstück für das Rezeptschleifen entfällt. Die gesamte abgegossene Fläche ist während des Fertigungsvorgangs durchgehend vollflächig geschützt

Gegossene Rohlinge müssen nach dem Gießen im Zuge des Abkühlen spannungsfrei getempert werden. Im Stand der Technik erfolgt dies in der Regel durch Lagern der Halbfertigfabrikate mit der konkaven Fläche nach unten auf Glasplatten liegend. Beim Tempern kann es zu Deformationen bei der erhöhten Temperatur kommen. Erfindungsgemäß kann hingegen das Tempern des Rohlings mit der noch angeblockten Gießform erfolgen. Der Rohling wird dabei vollflächig unterstützt, eine Deformation kann nicht stattfinden.

Durch die individuelle Fertigung und lediglich einmalige Verwendung einer durch 3D-Druck gefertigten Gießform ist es möglich, die abgegossene Fläche von vornherein an die individuellen Anforderungen eines Brillenträgers anzupassen. Dies beinhaltet mehrere Aspekte und Vorteile.

Im Stand der Technik werden die Formen in der Regel vielfach verwendet, so dass Individualisierung in der abgegossenen Flächen nicht oder allenfalls sehr begrenzt möglich sind. Dies bedeutet, dass in der anschließenden Rezeptfertigung in der Regel ein erheblicher Materialverlust von 70 % oder mehr auftritt. Eine individuell hergestellte Gießform kann von vornherein hinsichtlich Durchmesser, Randform, Form der abgegossenen Fläche und Dicke des Rohlings an den zukünftigen Brillenträger angepasst werden, so dass in der nachfolgenden Bearbeitung (Rezeptschleifen) nur noch ein geringer Materialabtrag erfolgt.

Die mit der Gießform abgegossene Fläche kann die Rückfläche oder vorzugsweise die Vorderfläche eines Brillenglases sein. Sie kann insbesondere konkav oder konvex ausgebildet sein und eine Einstärken- oder Mehrstärkenwirkung aufweisen. Die Fläche kann beispielsweise sphärisch, asphärisch, torisch, atorisch, bifokal, trifokal oder als progressive Fläche ausgebildet sein.

Die Gießformschale und optische Fläche der Gießform kann insbesondere zum Abgießen einer fertigen Brillenglasfläche ausgebildet sein, dabei kann es sich um eine Rezeptfläche handeln, die einige oder alle für den Brillenträger vorgesehenen Rezeptwirkungen umfasst. Wird beispielsweise eine Vorderfläche mit einer Progressionswirkung abgegossen, kann es sich grundsätzlich um eine Standard-Progressionsfläche ohne Anpassung an einen individuellen Benutzer handeln. Bevorzugt ist es im Rahmen der Erfindung jedoch, wenn eine solche Progressionsfläche als individuelle Progressionsfläche ausgebildet ist, bei der Progressionswirkung und/oder Anordnung und Verlauf des Progressionskanals von vorneherein an den vorgesehenen Brillenträger angepasst sind.

Ein weiterer Vorteil der Erfindung ist die Möglichkeit, die abgegossene Fläche des Brillenglases im Zuge des Abgießens mit verschiedenen Beschichtungen zu versehen. Vorzugsweise werden zu diesem Zweck auf die optische Fläche der Gießformschale nasschemische Beschichtungen aufgebracht, die beim Abgießen auf die entsprechende Brillenglasfläche übertragen werden. Das Auftragen nasschemischer Beschichtungen auf die optische Fläche kann bevorzugt durch geeignete Verfahren wie beispielsweise die Spin-Coating-Technologie erfolgen. Beispielsweise können solche Beschichtungen die nachfolgend aufgeführten Funktionen haben, die aufgezählt werden von außen nach innen (aus der Sicht des fertigen Brillenglases):
- Antifog-Schicht (bspw. Nanopartikel)
- Antistatik-Beschichtung
- Hydrophobierungsschicht
- Antireflexbeschichtung
- Polarisationsschicht
- Photochromschicht
- Haftvermittler zur Verbesserung der Haftung am Material des Brillenglases

Der Dichtring wirkt mit einer Gießform zur Bildung eines Gießhohlraums zusammen. Anders als im Stand der Technik wird somit erfindungsgemäß lediglich eine Gießform benötigt, deren optische Fläche zum Abgießen einer Brillenglasfläche dient. Die gegenüberliegende Fläche des Brillenglases wird erfindungsgemäß abgegossen durch Verwendung der flexiblen Membran des Dichtrings als Formelement.

Bevorzugt ist ein formgebendes Element für die flexible Membran des Dichtrings vorgesehen, das vorzugsweise als Federspannelement ausgebildet ist. Mit diesem formgebenden Element kann die Membran in die gewünschte Grundform (in der Regel konvex oder konkav) gebracht werden. Die Formgebung beispielsweise durch ein Federspannelement ist hinreichend genau, so dass über die Form der vorgesehenen endgültigen Fläche (in der Regel eine Rezeptfläche) lediglich ein geringes Materialaufmaß von bevorzugt zwischen 0,2 und 5 mm vorhanden ist, dass im Zuge der Rezeptfertigung noch abgetragen werden muss.

Das formgebende Element ist bevorzugt elastisch, wie beispielsweise ein Federspannelement, so dass während der Durchführung der Polymerisation auftretende Volumenänderungen oder insbesondere Schrumpfung bei der Polymerisation automatisch ausgeglichen werden können.

Die durch die flexible Membran geformte Fläche des Brillenglases wird in aller Regel im Rahmen einer Rezeptfertigung nachbearbeitet werden müssen, um die gewünschten Rezeptwirkungen zu erreichen. Wie vorstehend beschrieben kann jedoch wenigstens ein Teil der gewünschten Rezeptwirkungen durch die individuell durch 3D-Druck geformte optische Fläche der Gießform erfolgen.

Bevorzugt weist der Dichtring im Bereich der Umfangsdichtung wenigstens zwei Ein/Auslaufkanäle für Gießmasse auf. Bevorzugt sind diese Ein/Auslaufkanäle radial nach außen weisend am Umfang angeordnet, weiter bevorzugt etwa einander diametral gegenüberliegend, weiter bevorzugt sind sie in Axialrichtung dicht benachbart an demjenigen Randbereich des Umfangs angeordnet, der zu der flexiblen Membran hinweist.

Beim Gießen eines Brillenglasrohlings muss das flüssige Harz in die Gießform eingefüllt werden. Aufgrund der Neigung von im Harz vorhandenen Luftblasen, an Innenwänden der Gießform, insbesondere an Wänden des Dichtrings, anzuhaften, ist es problematisch, dabei die Luft vollständig zu verdrängen und insbesondere im Randbereich keine Lufteinschlüsse zu erhalten. Der beschriebene Aspekt der Erfindung sieht vor, dass wenigstens zwei Kanäle vorhanden sind, so dass ein Befüllen durch einen Kanal erfolgen kann, während die eingeschlossene Luft durch den zweiten Kanal entweicht. Dies erleichtert wesentlich ein blasenfreies Befüllen. Von besonderem Vorteil ist in diesem Zusammenhang die flexible Membran des Dichtrings, die als Pumpelement zum Befüllen dient. Wird die Membran beispielsweise mittels Unterdruck axial von der Gießform weg bewegt, bewirkt dies ein Ansaugen von Gießmasse. Wird sie nach dem Ansaugen beispielsweise durch Überdruck in die Gegenrichtung axial zurück bewegt, werden überschüssige Gießmasse und gegebenenfalls noch vorhandene Luftblasen ausgedrückt. Die Ein/Auslaufkanäle können bevorzugt flexibel und damit abklemmbar bzw. abdrückbar ausgestaltet sein. Dies ermöglicht es, nach dem Befüllen der Anordnung aus Gießform und Dichtring vor der Durchführung der Polymerisation den Gießhohlraum auf einfache Art und Weise zu verschließen.

Von besonderem Vorteil ist es, dass erfindungsgemäß die Ein/Auslaufkanäle sehr platzsparend ausgeführt sein können und in Axialrichtung nur wenig Raum benötigen. Dies ermöglicht es, erfindungsgemäß mit einer Anordnung aus Gießform und Dichtring Gläser mit sehr dünnen Randhöhen (diese sind insbesondere bei Plusgläsern erforderlich) abzugießen, bei denen im Zuge der nachfolgenden Bearbeitung nur noch ein sehr geringer Materialabtrag erforderlich ist. Erfindungsgemäß ist es beispielsweise möglich, bei jedweden Glasformen, so auch bei den beschriebenen Plusgläsern mit geringen Randhöhen, bei der durch die flexible Membran abgegossenen Fläche des Brillenglases nur ein sehr geringes Flächenaufmaß vorzusehen, dass beispielsweise zwischen 0,2 und 5 mm liegen kann. Bevorzugt sind Werte von 0,2-3 mm, weiter vorzugsweise 0,2-1,5 mm, weiter vorzugsweise 0,2-1 mm. Dementsprechend erfolgt bei der nachgelagerten Rezeptfertigung nur ein sehr geringer Materialabtrag. Ein besonderer Vorteil der Erfindung ist es auch, dass sehr dünne Rohlinge nach dem Gießen ohne Deformationen spannungsfrei getempert werden können, da sie während dieses Vorgangs weiterhin vollflächig von der Gießform unterstützt werden. Im Stand der Technik hingegen, bei dem die Gläser zum spannungsfrei Tempern in der Regel nur auf dem Rand der konkaven Fläche gelagert werden, treten gerade bei dünnen Gläsern verstärkt unerwünschte Deformationen auf, die häufig durch Nachbearbeiten während der Rezeptfertigung wieder aufwändig korrigiert werden müssen.

Der Dichtring kann zur Aufnahme einer Gießform in unterschiedlichen Stellungen ausgebildet sein dergestalt, dass Gießhohlräume mit unterschiedlichen Randhöhen entstehen. Die Gießform kann beispielsweise unterschiedlich tief in die Umfangsdichtung eingeschoben werden. Eine Anordnung aus Gießform und Dichtring kann somit für verschiedene Randhöhen von Rohlingen variabel genutzt werden, bevorzugt beispielsweise für Randhöhen von 1 bis 20 mm. Die Mittendicken von Gläsern können erfindungsgemäß somit ebenfalls auf einfache Art und Weise variiert werden, bevorzugte Mittendicken können beispielsweise zwischen 1 und 20 mm liegen. Das erfindungsgemäß mögliche Gießen von Gläsern mit geringen Mittendicken erlaubt die Fertigung von starken Minusgläsern, die sehr wenig Flächenaufmaß aufweisen und dementsprechend wenig Materialabtrag bei der Nachbearbeitung erfordern.

Es kann vorgesehen sein, dass ein Dichtring am Innenumfang der Umfangsdichtung Einrichtungen zur Fixierung einer Gießform in wenigstens einem Tiefenmaß aufweist. Dabei kann es sich beispielsweise um eine Stufe am Innenumfang handeln, an die der Rand der Gießform anschlägt und damit Gießform und Dichtring in eine definierte axiale Lage zueinander bringt. Gegebenenfalls können auch mehrere Stufen am Innenumfang vorhanden sein, um eine Fixierung mit unterschiedlichen Tiefenmaßen zu ermöglichen. Der Dichtring kann zusätzlich eine Einführschräge aufweisen, um das Zusammenfügen mit einer Gießform zu erleichtern.

Erfindungsgemäß lassen sich Rohlinge individualisiert in einem breiten Bereich von Abmessungen und Krümmungen herstellen. Beispielsweise können die Grundkurven der abgegossenen Flächen eben sein oder gekrümmt (vorzugsweise konvex) mit Radien bevorzugt bis zu 30 mm. Wenn zunächst Rohlinge mit kreisrunder Umfangsform hergestellt werden sollen, können die Durchmesser erfindungsgemäß beispielsweise zwischen 40 und 100 mm liegen. Es können sinnvolle und hinreichend kleine Abstufungen des Durchmessers vorgesehen sein, so dass sich das endgültige Brillenglas günstig und mit wenig Materialabtrag am Rand herstellen lässt. Die Abstufungen im Durchmesser können beispielsweise 5 mm betragen, sinnvolle Durchmesserstufen können beispielsweise 58, 63, 68, 73, 78 mm usw. betragen.

Bei der Herstellung einer Gießform kann im ersten Schritt das Flächendesign der Gießformschale festgelegt werden. Es kann sich dabei um ein Standarddesign handeln, bevorzugt ist es jedoch ein bereits wenigstens teilweise individuell angepasstes Design, die individuell angepassten Aspekte können beispielsweise Durchmesser bzw. Form des Glases sein, die Krümmung der abgegossenen Fläche oder individuelle Rezeptwerte wie beispielsweise eine Progressionsfläche mit vorgegebenem Progressionswert und Verlauf des Progressionskanals. Das so festgelegte Flächendesign wird an einen 3D-Drucker übertragen. Im nächsten Schritt wird wenigstens die Gießformschale mit ihrer optischen Fläche, bevorzugt jedoch die gesamte Gießform durch 3D-Drucken hergestellt. Zur Herstellung dieser lediglich einmalig zu verwendenden Gießform kann ein biologisch abbaubarer Kunststoff verwendet werden, der die Entsorgung der Gießform nach deren Verwendung erleichtert.

Die optische Fläche der Gießform kann zusätzlich poliert und/oder mit wenigstens einer nasschemischen Beschichtung versehen werden, die zur Übertragung auf die abgegossene Fläche des Rohlings bzw. Gießlings ausgebildet ist. Mögliche und bevorzugte Beschichtungen sind weiter oben bereits beschrieben worden. Eine Gießform kann durch 3D-Druck mit einer Vorlaufzeit von wenigen Stunden hergestellt und dem Abgießen zugeführt werden. Da die Form bevorzugt lediglich einmal verwendet wird, können bei Mehrfachverwendungen übliche Störungen auf der optischen Fläche der Gießform (verursacht beispielsweise durch Verunreinigungen oder dergleichen bei einer Mehrfachverwendung) vermieden werden.

Ausführungsbeispiele der Erfindung werden nachfolgend anhand der Zeichnung erläutert. Darin zeigen schematisch:
- Fig. 1:: Eine Anordnung mit konkaver Gießform im Querschnitt;
- Fig. 2:: Die Anordnung der Fig. 1 teilweise befüllt und mit durch ein Federspannelement fixierter Membran;
- Fig. 3:: Eine Anordnung mit konvexer Gießform im Querschnitt;
- Fig. 4:: Die Anordnung der Fig. 3 teilweise befüllt und mit durch ein Federspannelement fixierter Membran;
- Fig. 5-18:: Schematisch den Ablauf eines erfindungsgemäßen Verfahrens zum Gießen eines Brillenglases;

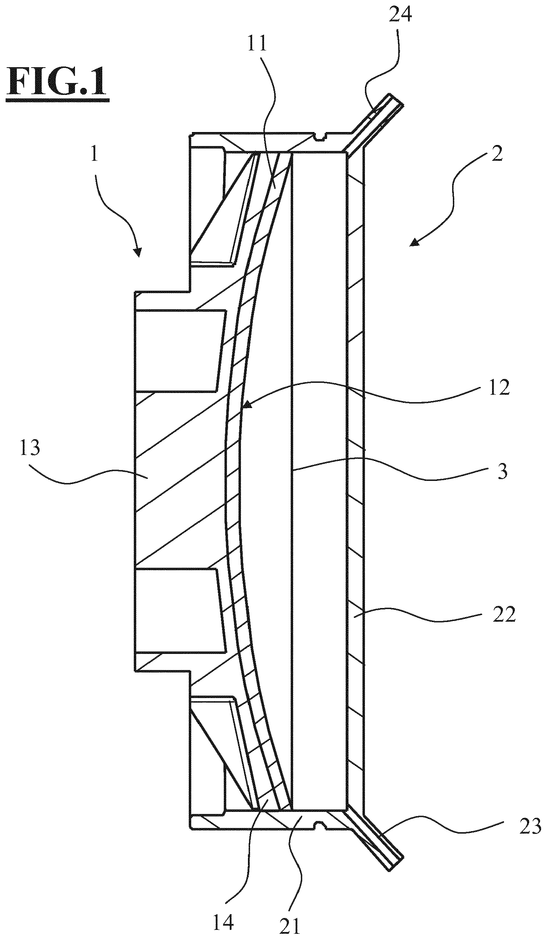

Figur 1 zeigt im Querschnitt eine Gießform 1 eingesetzt in einen Dichtring 2.

Die Gießform 1 weist eine Gießformschale 11 auf, die eine zum Abgießen eines Rohlings ausgebildete Gießformfläche bzw. optische Fläche 12 aufweist. Im gezeigten Ausführungsbeispiel ist diese optische Fläche 12 konkav ausgebildet, sie kann beispielsweise eine sphärische Fläche oder eine rotationssymmetrische asphärische Fläche sein.

Die Gießform 1 und insbesondere die Gießformschale 11 mit der optischen Fläche 12 sind durch 3D-Druck hergestellt.

Die optische Fläche 12 besitzt eine Form und Oberflächengüte, die beim Abgießen eine Fläche eines Brillenglases definiert, die ohne weitere Nachbearbeitung eine hinreichende optische Qualität besitzt. Durch die Herstellung mittels 3D-Druck kann insbesondere diese Fläche individuell an den vorgesehenen Benutzer angepasst sein und beispielsweise bereits Rezeptwerte aufweisen.

Die Gießform 1 weist ein Blockstück 13 auf, das der Verbindung der Gießform 1 und eines daran angegossenen Rohlings mit Bearbeitungsmaschinen zur Nachbearbeitung des Rohlings bis hin zum fertigen Brillenglas dient.

Die optische Fläche 12 ist mit nasschemischen Beschichtungen versehen, wie vorstehend näher beschrieben.

Die Gießform 1 ist mit ihrem Umfangsrand 14 in die Umfangsdichtung 21 des Dichtrings 2 eingesetzt und wird von dieser Umfangsdichtung 21 dichtend umfasst. Der Dichtring 2 weist eine flexible Membran 22 auf, im Bereich des Übergangs der flexiblen Membran 22 in die Umfangsdichtung 21 finden sich an zwei diametral gegenüberliegenden Stellen des Umfangs zwei Ein- bzw. Auslasskanäle 23,24. Die beiden Kanäle 23,24 sind ebenfalls aus flexiblem Material gefertigt und können somit durch Abquetschen verschlossen werden. Die Gießform 1 kann unterschiedlich tief in die Umfangsdichtung 21 des Dichtrings 2 eingesetzt werden, um so Rohlinge mit unterschiedlichen Randhöhen abzugießen. Die Gießformschale 12 und der Dichtring 2 mit der Umfangsdichtung 21 und der flexiblen Membran 22 schließen miteinander einen Gießhohlraum 3 ein.

Zum Gießen eines Rohlings wird der Gießhohlraum 3 mit Monomer (polymerisierbarer Masse) gefüllt. Das Befüllen geschieht über einen der Kanäle 23, 24, vorzugsweise wird über den jeweils anderen Kanal die Luft aus dem Gießhohlraum 3 entweichen gelassen. Um das Befüllen zu erleichtern, wird die Außenseite der flexiblen Membran 22 mit Unterdruck beaufschlagt.

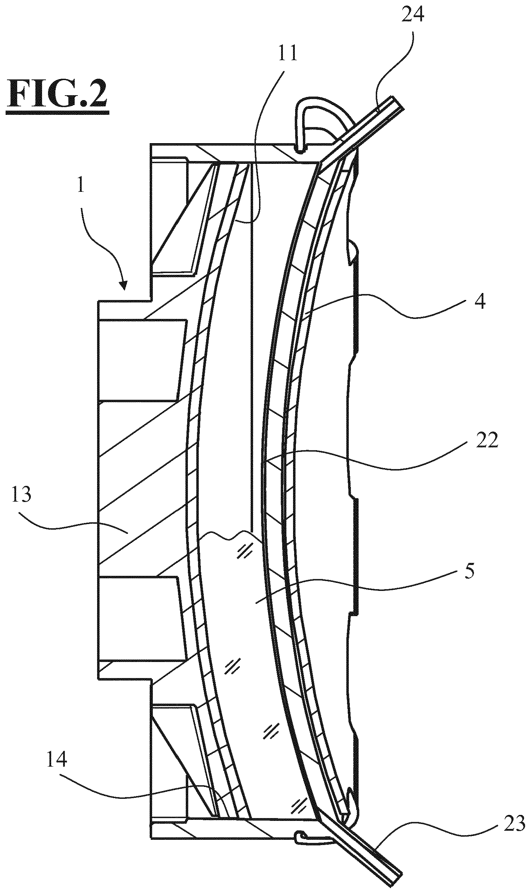

Nach dem Befüllen des Gießhohlraums 3 kann die flexible Membran 22 durch ein in Figur 2 dargestelltes Federspannelement 4 in die gewünschte Form gebracht werden, die ungefähr der gewünschten endgültigen Form der entsprechenden Seite des Brillenglases entspricht zuzüglich eines Flächenaufmaßes von 0,2-5 mm. Figur 2 zeigt schematisch einen Zustand, bei dem das Federspannelement 4 bereits eingesetzt ist und, wie bei 5 angedeutet, der Gießhohlraum 3 teilweise mit polymerisierbarer Masse gefüllt ist. Es sei angemerkt, dass dieser schematisch dargestellte Zustand im regulären Betrieb in der Praxis nicht auftritt, da das Federspannelement 4 in der Regel erst nach vollständigem Befüllen und Entlüften des Gießhohlraums 3 eingesetzt wird.

Bei dem Ausführungsbeispiel der Figuren 1 und 2 dient die Gießform 1 mit ihrer konkaven optischen Fläche 12 zur Abformung einer konvexen Fläche eines Rohlings, dies wird in der Regel die Vorderfläche eines Brillenglases sein. Aufgrund der individuellen Fertigung der Gießformschale 12 durch 3D-Druck kann diese Vorderfläche nicht nur eine Standardfläche sein, sie kann vielmehr bereits individuell auf den Benutzer des Brillenglases angepasst sein, beispielsweise bereits eine individuell angepasste Progressionsfläche sein.

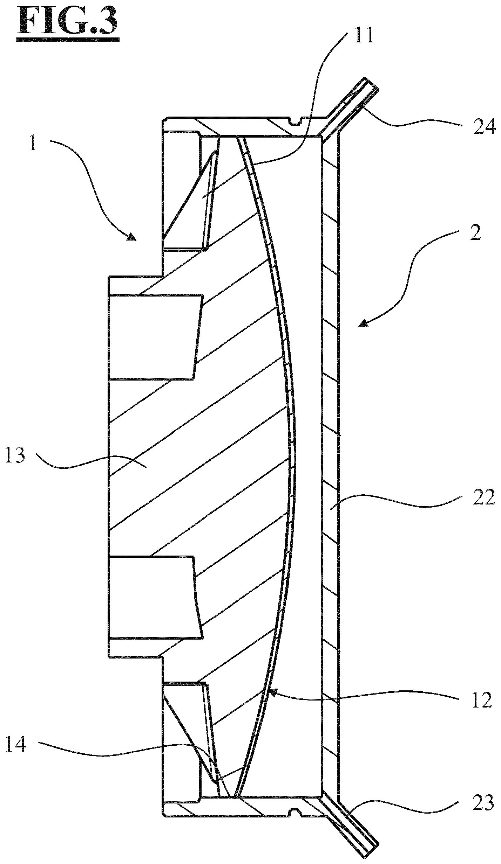

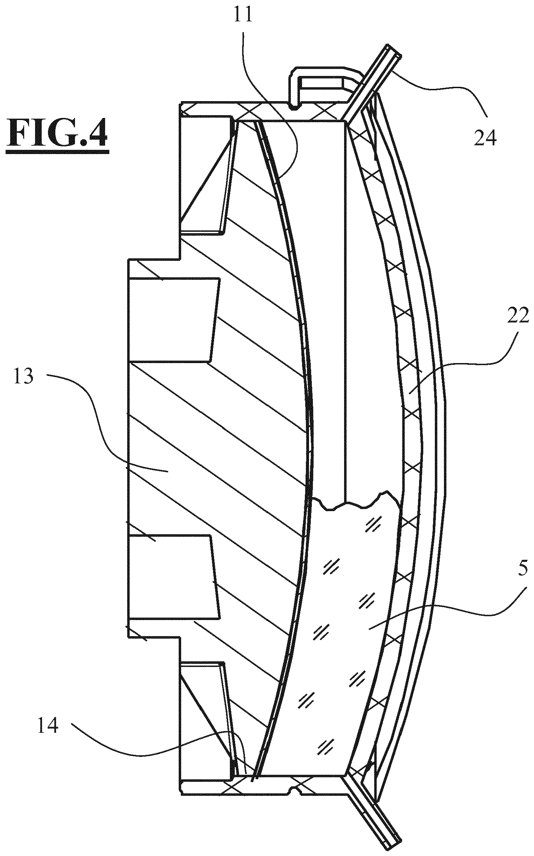

Die Figuren 3 und 4 zeigen eine zweite Ausführungsform der Erfindung. Sie entspricht weitgehend der ersten Ausführungsform, jedoch ist hier die Gießformschale 11 mit der optischen Fläche 12 konvex ausgebildet zum Abgießen einer konkaven Fläche eines Brillenglases. Es wird sich bei dieser Variante in der Regel um die Rückfläche eines Brillenglases handeln.

Ein besonderer Vorteil der Erfindung ist, dass auch bei der Gießform 1 gemäß dem Ausführungsbeispiel in den Figuren 3 und 4 ein identischer Dichtring 2 verwendet werden kann, der mit der entsprechenden Gießform 1 zusammenwirkt. Wie in Figur 4 dargestellt, kann die flexible Membran 22 des Dichtrings 2 durch ein entsprechend geformtes Federspannelement 6 in eine zum Gießhohlraum 3 weisende konkave Form gebracht werden, so dass im Ausführungsbeispiel der Figuren 3 und 4 auf der Seite der flexiblen Membran 22 eine konvex geformte Brillenglasfläche abgegossen wird. Auch in diesem Fall wird die auf der Seite der flexiblen Membran 22 abgegossene Brillenglasfläche in der Regel ein Flächenaufmaß von 0,2-5 mm aufweisen, um eine entsprechende Nachbearbeitung im Zuge des Rezeptschleifens zu erlauben.

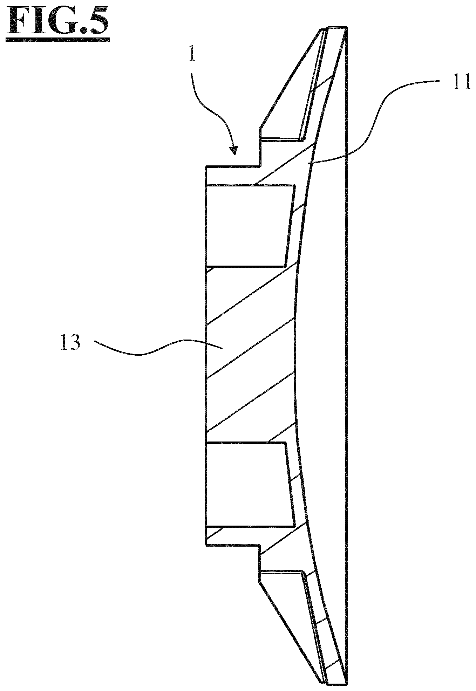

Ein vollständiger Verfahrensablauf der erfindungsgemäßen Herstellung eines Brillenglases wird nachfolgend unter Bezugnahme auf die Fig. 5-18 beschrieben.

Im ersten Schritt wird das Flächendesign der Gießform festgelegt, vorzugsweise unter Berücksichtigung individueller Anforderungen und/oder Rezeptwerte. Aus dem festgelegten Flächendesign werden 3D-Dateien abgeleitet und modelliert, die an einen 3D-Drucker übertragen. Die vollständige Gießform 1 einschließlich des damit verbundenen Blockstücks 13 wird durch 3D-Druck hergestellt. Sie ist in Figur 5 gezeigt.

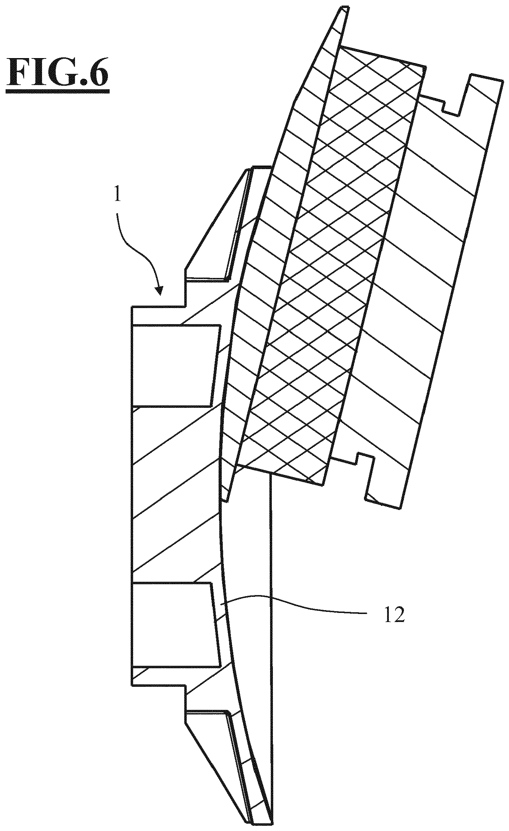

Die optische Fläche 12 der gedruckten Gießform kann gegebenenfalls poliert werden (Fig. 6). Anschließend kann sie gereinigt und gegebenenfalls aktiviert werden.

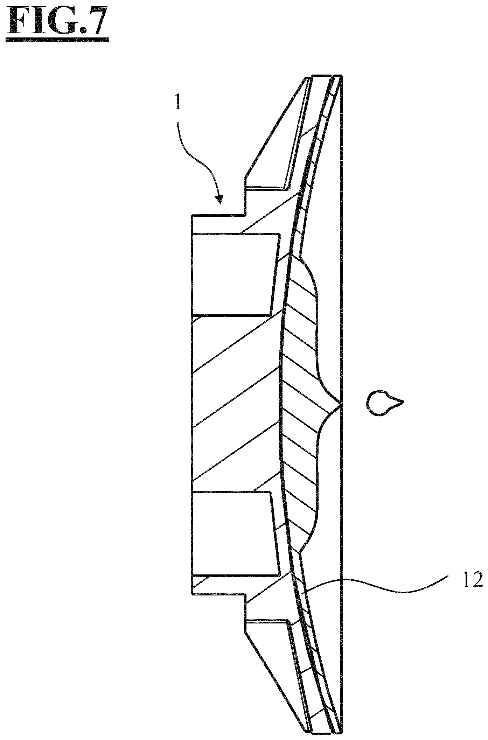

Bevorzugt ist eine Beschichtung der so vorbereiteten optischen Fläche mit einer oder mehrerer nasschemisch aufgetragenen Schichten (bevorzugt aufgetragen mittels Spin-Coating-Technologie), wie in Fig. 7 gezeigt. Diese Schichten werden später beim Gießen auf den Rohling übertragen.

Es ist erfindungsgemäß bevorzugt, die so hergestellte Gießformfläche genau zu vermessen und das Messergebnis in einer Datenbank zu speichern. Beim späteren Rezeptschleifen kann dann auf dieses Messergebnis zurückgegriffen werden.

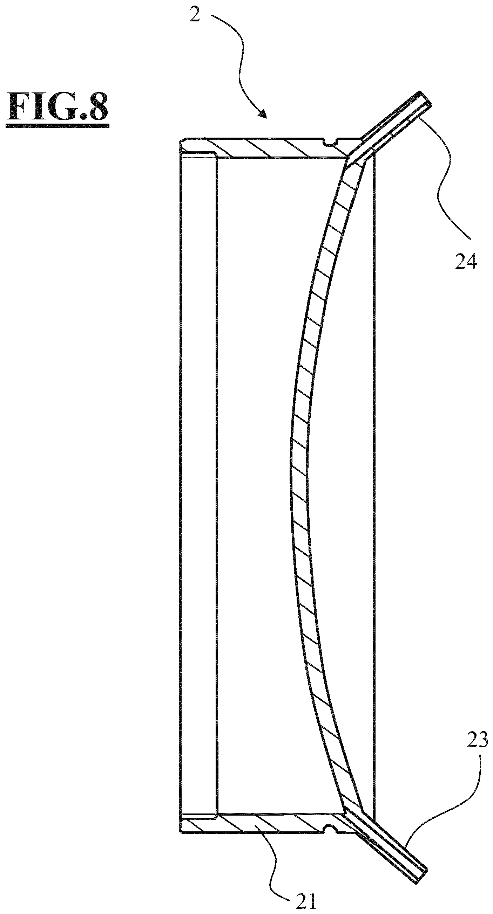

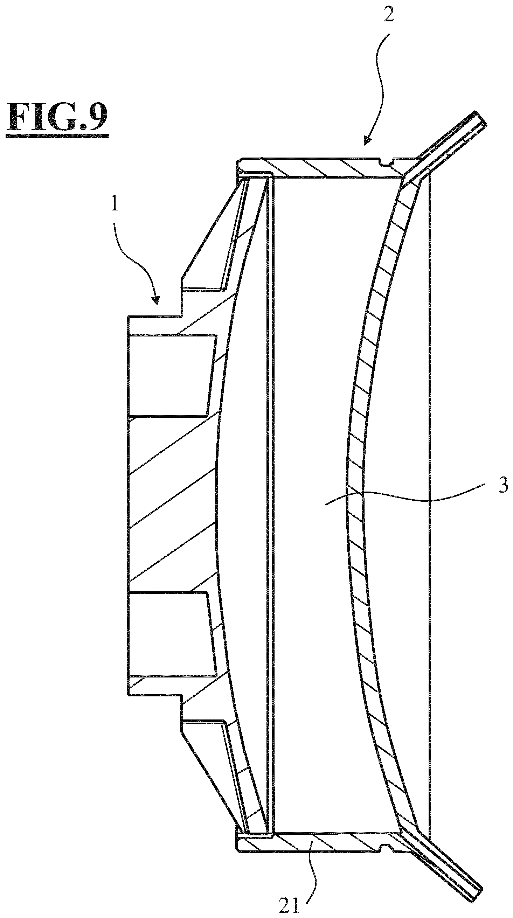

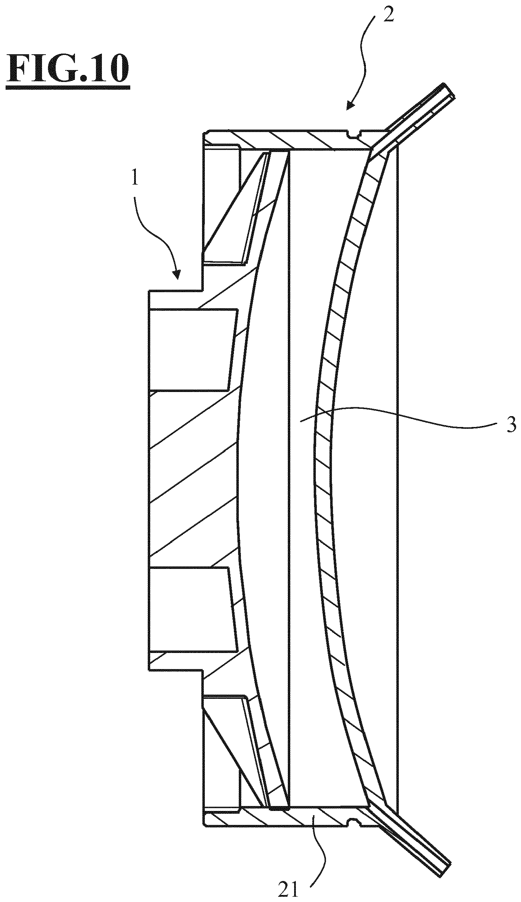

Die so hergestellte und vorbereitete Gießform wird in einen passenden Dichtring 2 eingeführt, der in Fig. 8 gezeigt ist. Gießform und Dichtring werden axial auf das geforderte Tiefenmaß gefügt. Wie in den Fig. 9 und 10 dargestellt, können zum Abgießen unterschiedlich dicker Rohlinge unterschiedliche Tiefenmaße gewählt werden.

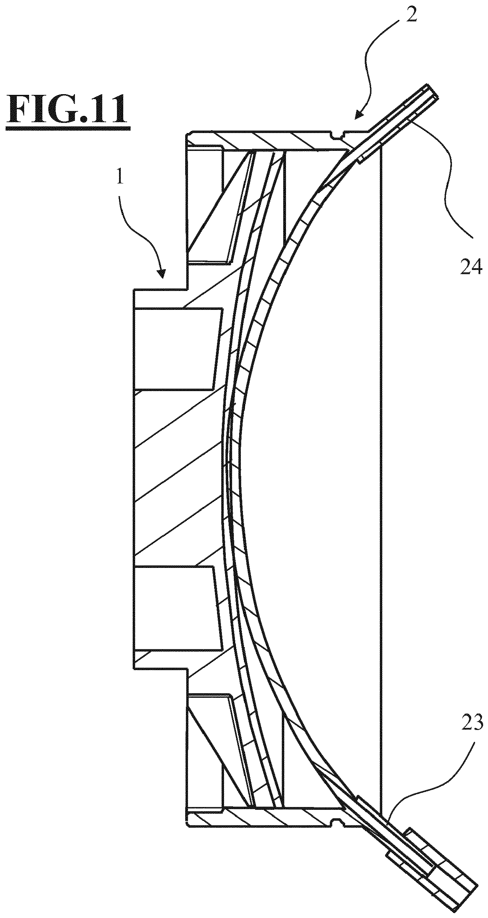

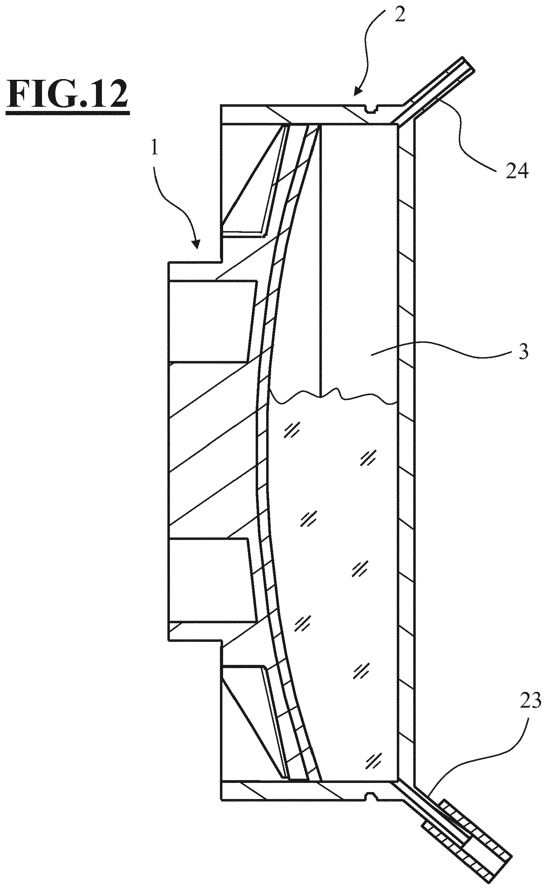

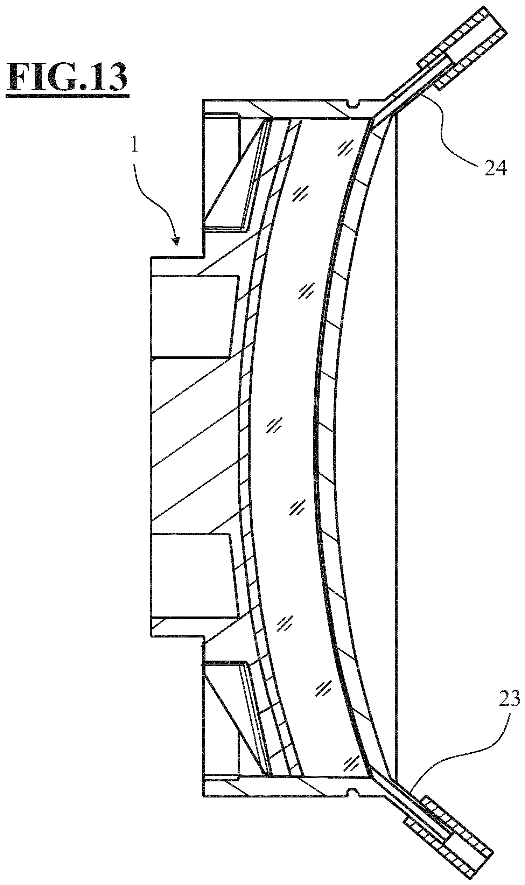

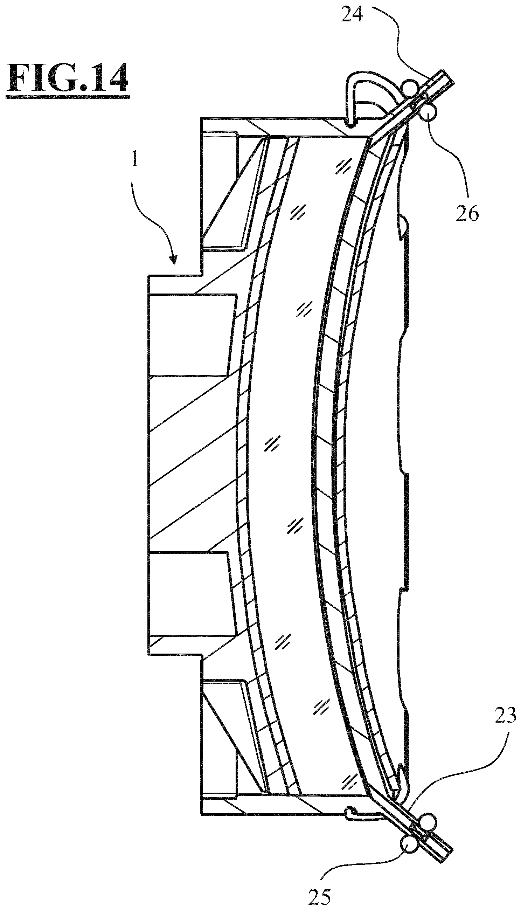

Die Ein- und Auslaufkanäle 23, 24 des Dichtrings 2 werden an die Monomerversorgung angeschlossen (Fig. 11). Die so vorbereitete Anordnung aus Gießform und Dichtring wird in einen Pumpmechanismus eingesetzt, mittels dem sich die flexible Membran mit Unterdruck und/oder Überdruck beaufschlagen lässt. Zunächst wird der Gießhohlraum 3 soweit als möglich abgepumpt, also die Luft daraus entfernt (Fig. 12). Anschließend wird der Gießhohlraum mit Monomer gefüllt (Fig. 12 und 13). Die erfindungsgemäß vorgesehenen Ein- und Auslaufkanäle erlauben auf einfache Art und Weise das blasenfreie Befüllen. Mittels des Pumpmechanismus kann hinreichend Unterdruck erzeugt und die flexible Membran entsprechend gedehnt werden, so dass ein komplettes Befüllen ohne Luftblasen erfolgen kann. Der Auslasskanal wird erst dann verschlossen, wenn alle Luftblasen ausgetragen sind. Anschließend kann auch der Einlasskanal verschlossen werden. Das Verschließen kann durch Abklemmen erfolgen, wie in Figur 14 schematisch bei 25, 26 angedeutet.

Die flexible Membran wird mittels des aufgesetzten und eingerasteten Federspannelements 4 in der gewünschten Form fixiert (Fig. 14). Der gesamte Vorgang kann erfindungsgemäß vollautomatisch in einem von der Umgebung komplett abgeschlossenen Inlineprozess erfolgen, da das erfindungsgemäß mögliche einfache Befüllen und Entfernen von Luftblasen eine solche Automatisierung ermöglicht.

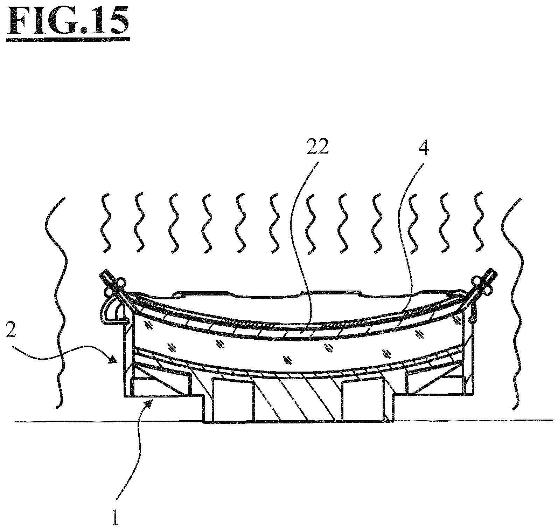

Die befüllte Anordnung wird von der Monomerversorgung abgenommen und die Polymerisation durchgeführt (Fig. 15). Ein solcher Polymerisationszyklus kann beispielsweise bis zu 48 h dauern und Kühl- und Aufheizphasen umfassen.

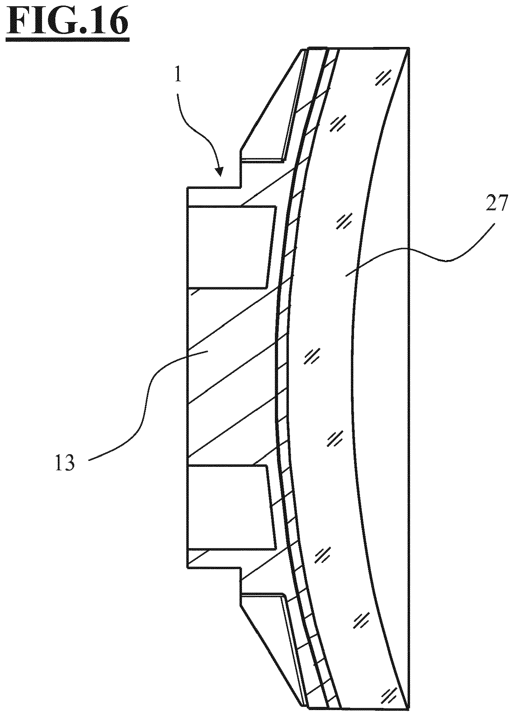

Nach Abschluss der Polymerisation werden das Federspannelement und der Dichtring abgenommen. Der Rohling 27 verbleibt auf der erfindungsgemäßen Gießform (Fig. 16), die entsprechende Seite des Rohlings wird somit im Zuge der weiteren Bearbeitung geschützt. Es erfolgt eine Kontrolle des Rohlings auf Sauberkeit.

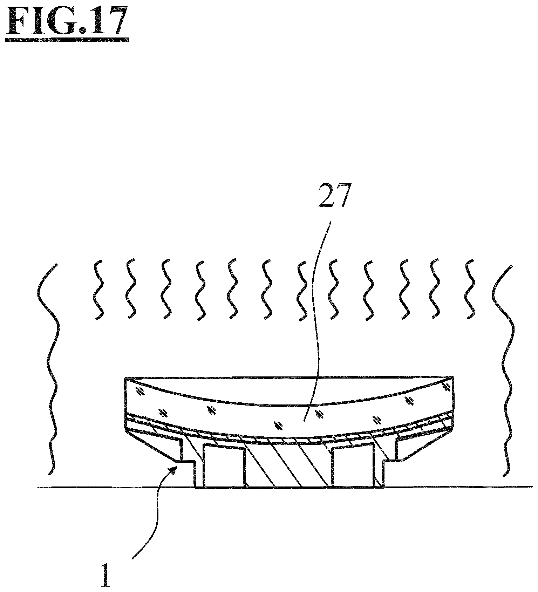

Im nächsten Schritt erfolgt ein spannungsfrei Tempern des Rohlings (Fig. 17). Dieser verbleibt dabei auf der Gießform, die ihn vollflächig unterstützt und Deformationen verhindert auch bei am Rand oder in der Mitte dünnen Rohlingen. Die Gießform 1 und das Blockstück 13 der Gießform dienen im Zuge der weiteren Bearbeitung als Schnittstelle zu Halteelementen von Werkzeugmaschinen oder dergleichen.

Im nächsten Schritt kann die Flächentreue durch geeignete mechanische Abtastverfahren oder durch Reflexionsverfahren (bspw. den Dual Lensmapper der Fa. Automation & Robotics) geprüft werden. Die fertigen Rohlinge mitsamt der daran verbleibenden Gießformen können verpackt werden und zum Rezeptschleifen versendet werden.

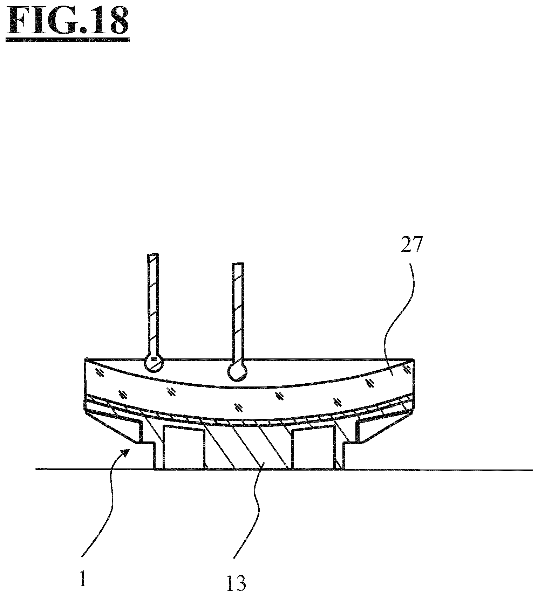

Beim nachgelagerten Rezeptschleifen dient die Gießform als Blockstück (Fig. 18). Nach Abschluss des in herkömmlicher Art und Weise durchgeführten Rezeptschleifens wird das fertige Brillenglas von der Gießform getrennt, diese wird entsorgt.

## Patentansprüche

1. Verfahren zur Herstellung eines Brillenglases, mit den Schritten:
a) Zusammenfügen
i. einer Gießform (1) und einer durch Urformen hergestellten Gießformschale (11),
ii. und eines Dichtrings, der eine Umfangsdichtung (21), an einer ersten Stirnseite eine Öffnung zur Aufnahme einer Gießform, und an der zweiten Stirnseite eine flexible Membran (22) aufweist,
unter Bildung eines Gießhohlraums,
b) Einfüllen eines polymerisierbaren Materials in den Gießhohlraum (3),
c) Fixieren der flexiblen Membran (22) des Dichtrings (2) in der gewünschten Flächenform,
d) Durchführen der Polymerisation,
e) Entnahme der Gießform (1) mit dem angegossenen Brillenglasrohling aus dem Dichtring (2), **dadurch gekennzeichnet dass**, die Gießform (1) ein integriertes Blockstück (13) aufweist und das Einfüllen des polymerisierbaren Materials in den Gießhohlraum (3) unter Zuhilfenahme einer Pumpwirkung der flexiblen Membran (22) des Dichtrings (2) erfolgt.

2. Verfahren nach Anspruch 1, **gekennzeichnet durch** das zusätzliche Durchführen von ggf. erforderlichen Nachbearbeitungsschritten, insbesondere Rezeptschleifen, zur Herstellung des fertigen Brillenglases.

3. Verfahren nach Anspruch 1 oder 2, **dadurch gekennzeichnet, dass** das Fixieren der flexiblen Membran (22) des Dichtrings (2) in der gewünschten Flächenform durch ein formgebendes Element, vorzugsweise ein Federspannelement (4, 6), erfolgt.

4. Verfahren nach einem der Ansprüche 1 bis 3, **dadurch gekennzeichnet, dass** ggf. erforderliche Nachbearbeitungsschritte wenigstens teilweise unter Verbleib des Brillenglasrohlings auf der Gießform (1) unter Verwendung des integrierten Blockstücks (13) durchgeführt werden.

5. Verfahren nach einem der Ansprüche 1 bis 4, **dadurch gekennzeichnet, dass** der Brillenglasrohling mit einem Flächenaufmaß von 10 mm oder weniger, vorzugsweise 5 mm oder weniger, weiter vorzugsweise 0,2 bis 5 mm, hergestellt wird.

6. Verfahren nach einem der Ansprüche 1 bis 5, **dadurch gekennzeichnet, dass** der Materialabtrag bei der Nachbearbeitung des Brillenglasrohlings 20 Gew.-% oder weniger, vorzugsweise 10 Gew.-% oder weniger, beträgt.

7. Verfahren nach einem der Ansprüche 1 bis 6, **dadurch gekennzeichnet, dass** die Gießformschale (11) durch Spritzgießen oder durch 3D-Druck geformt ist.

8. Verfahren nach einem der Ansprüche 1 bis 7, **dadurch gekennzeichnet, dass** der Dichtring (2) im Bereich der Umfangsdichtung (21) wenigstens zwei Ein/Auslaufkanäle (23, 24) für Gießmasse aufweist.

9. Verfahren nach Anspruch 8, **dadurch gekennzeichnet, dass** die Ein/Auslaufkanäle (23, 24) abdrückbar sind.

10. Verfahren nach Anspruch 8 oder 9, **dadurch gekennzeichnet, dass** das Einfüllen eines polymerisierbaren Materials in den Gießhohlraum (3) folgende Schritte umfasst:
a) Einsetzen der Anordnung aus Gießform und Dichtring in einen Pumpmechanismus, mittels dem sich die flexible Membran (22) mit Unterdruck und/oder Überdruck beaufschlagen lässt,
b) Abpumpen des Gießhohlraums (3) zur Entfernung von Luft,
c) Füllen des Gießhohlraums (3) mit Monomer durch Erzeugen von Unterdruck mittels des Pumpmechanismus und Dehnen der flexiblen Membran (22),
d) optional Ausdrücken überschüssigen Monomers und ggf. noch vorhandener Luftblasen,
e) Verschließen von Auslasskanal (24) und Einlasskanal (23).

11. Verfahren nach einem der Ansprüche 1 bis 10, **dadurch gekennzeichnet, dass** der Dichtring (2) zur Aufnahme einer Gießform in unterschiedlichen Stellungen ausgebildet ist dergestalt, dass Gießhohlräume (3) mit unterschiedlichen Randhöhen entstehen.

12. Verfahren nach einem der Ansprüche 1 bis 11, **dadurch gekennzeichnet, dass** der Dichtring (2) am Innenumfang der Umfangsdichtung (21) Einrichtungen zur Fixierung einer Gießform in wenigstens einem definierten Tiefenmaß aufweist.

## Claims

1. Method for producing a spectacle lens, comprising the steps of:
a) joining together
i. a mould (1) and a mould shell (11) produced by primary forming,
ii. and a sealing ring, which comprises a peripheral seal (21), on a first end face an opening for receiving a mould, and on the second end face a flexible membrane (22),
to form a mould cavity,
b) introducing a polymerizable material into the mould cavity (3),
c) fixing the flexible membrane (22) of the sealing ring (2) in the desired surface shape,
d) carrying out the polymerization,
e) removing the mould (1) with the moulded-on spectacle lens blank from the sealing ring (2),
**characterized in that** the mould (1) has an integrated block piece (13) and the introduction of the polymerizable material into the mould cavity (3) takes place with the aid of a pumping action of the flexible membrane (22) of the sealing ring (2).

2. Method according to Claim 1, **characterized by** additionally carrying out possibly required finishing steps, in particular prescription grinding, for producing the finished spectacle lens.

3. Method according to Claim 1 or 2, **characterized in that** the fixing of the flexible membrane (22) of the sealing ring (2) in the desired surface shape is performed by a shaping element, preferably a spring tension element (4, 6).

4. Method according to one of Claims 1 to 3, **characterized in that** possibly required finishing steps are at least partially carried out while the spectacle lens blank remains on the mould (1), by using the integrated block piece (13).

5. Method according to one of Claims 1 to 4, **characterized in that** the spectacle lens blank is produced with a surface allowance of 10 mm or less, preferably 5 mm or less, more preferably 0.2 to 5 mm.

6. Method according to one of Claims 1 to 5, **characterized in that** the removal of material in the finishing of the spectacle lens blank is 20% by weight or less, preferably 10% by weight or less.

7. Method according to one of Claims 1 to 6, **characterized in that** the mould shell (11) is formed by injection moulding or 3D printing.

8. Method according to one of Claims 1 to 7, **characterized in that** the sealing ring (2) has in the region of the peripheral seal (21) at least two inlet/outlet channels (23, 24) for moulding compound.

9. Method according to Claim 8, **characterized in that** the inlet/outlet channels (23, 24) can be closed by being pinched off.

10. Method according to Claim 8 or 9, **characterized in that** the introduction of a polymerizable material into the mould cavity (3) comprises the following steps:
a) inserting the arrangement of the mould and the sealing ring into a pumping mechanism by means of which the flexible membrane (22) can be subjected to negative pressure and/or positive pressure,
b) pumping out the mould cavity (3) so as to remove air,
c) filling the mould cavity (3) with monomer by generating negative pressure by means of the pumping mechanism and stretching the flexible membrane (22),
d) optionally squeezing out excess monomer and air bubbles that are possibly still present,
e) closing the outlet channel (24) and the inlet channel (23) .

11. Method according to one of Claims 1 to 10, **characterized in that** the sealing ring (2) is designed for receiving a mould in different positions in such a way that mould cavities (3) with different edge heights are created.

12. Method according to one of Claims 1 to 11, **characterized in that** the sealing ring (2) has on the inner circumference of the peripheral seal (21) devices for fixing a mould in at least one defined depth dimension.

## Revendications

1. Procédé de fabrication d'un verre de lunettes, le procédé comprenant les étapes suivantes :
a) assembler
i. un moule de coulée (1) et une coque de moule de coulée (11) réalisée par moulage primaire,
ii. et une bague d'étanchéité qui comporte une garniture d'étanchéité périphérique (21), une ouverture ménagée au niveau d'un premier côté frontal et destinée à recevoir un moule de coulée et une membrane flexible (22) située au niveau du deuxième côté frontal,
pour former une cavité de coulée,
b) remplir la cavité de coulée (3) avec une matière polymérisable,
c) fixer la membrane flexible (22) de la bague d'étanchéité (2) à la forme de surface souhaitée,
d) effectuer la polymérisation,
e) retirer le moule de coulée (1) avec l'ébauche de verre de lunettes coulée de la bague d'étanchéité (2), **caractérisé en ce que** le moule de coulée (1) comporte un bloc intégré (13) et le remplissage de la cavité de coulée (3) avec la matière polymérisable est effectué à l'aide d'une action de pompage de la membrane flexible (22) de la bague d'étanchéité (2).

2. Procédé selon la revendication 1, **caractérisé en ce que** des étapes de post-traitement éventuellement nécessaires, en particulier des boucles de recette, sont en plus réalisées pour fabriquer le verre de lunettes fini.

3. Procédé selon la revendication 1 ou 2, **caractérisé en ce que** la fixation de la membrane flexible (22) de la bague d'étanchéité (2) à la forme de surface souhaitée est effectuée par un élément de formage, de préférence un élément de tension à ressort (4, 6).

4. Procédé selon l'une des revendications 1 à 3, **caractérisé en ce que** des étapes de post-traitement éventuellement nécessaires sont réalisées au moins en partie avec maintien de l'ébauche de verre de lunettes sur le moule de coulée (1) à l'aide du bloc intégré (13).

5. Procédé selon l'une des revendications 1 à 4, **caractérisé en ce que** l'ébauche de verre de lunettes est réalisée avec une dimension de surface de 10 mm ou moins, de préférence de 5 mm ou moins, plus préférablement de 0,2 à 5 mm.

6. Procédé selon l'une des revendications 1 à 5, **caractérisé en ce que** l'enlèvement de matière dans le post-traitement de l'ébauche de verre de lunettes est de 20 % en poids ou moins, de préférence de 10 % en poids ou moins.

7. Procédé selon l'une des revendications 1 à 6, **caractérisé en ce que** la coque de moule de coulée (11) est formée par moulage par injection ou par impression 3D.

8. Procédé selon l'une des revendications 1 à 7, **caractérisé en ce que** la bague d'étanchéité (2) comporte dans la région de la garniture d'étanchéité périphérique (21) au moins deux conduits d'entrée/sortie (23, 24) destinés à la matière de coulée.

9. Procédé selon la revendication 8, **caractérisé en ce que** les conduits d'entrée/sortie (23, 24) peuvent être resserrés.

10. Procédé selon la revendication 8 ou 9, **caractérisé en ce que** le remplissage de la cavité de coulée (3) avec une matière polymérisable comprend les étapes suivantes :
a) insérer l'ensemble formé par le moule de coulée et la bague d'étanchéité dans un mécanisme de pompage au moyen duquel la membrane flexible (22) peut être soumise à une pression négative et/ou une surpression,
b) pomper la cavité de coulée (3) pour éliminer l'air,
c) remplir la cavité de coulée (3) avec un monomère par génération d'une pression négative au moyen du mécanisme de pompage et par étirement de la membrane flexible (22),
d) éventuellement éjecter l'excès de monomère et d'éventuelles bulles d'air encore restantes,
e) fermer le conduit de sortie (24) et le conduit d'entrée (23) .

11. Procédé selon l'une des revendications 1 à 10, **caractérisé en ce que** la bague d'étanchéité (2) est conçue pour recevoir un moule de coulée dans différentes positions de manière à générer des cavités de coulée (3) ayant des hauteurs de bord différentes.

12. Procédé selon l'une des revendications 1 à 11, **caractérisé en ce que** la bague d'étanchéité (2) comporte, au niveau de la périphérie intérieure de la garniture d'étanchéité périphérique (21), des moyens de fixation d'un moule de coulée à au moins une profondeur définie.
